# EUROPÄISCHE PATENTSCHRIFT

(11) **EP 2 978 652 B1**
(45) Veröffentlichungstag und Bekanntmachung des Hinweises auf die Patenterteilung: **30.09.2020**
(21) Anmeldenummer: 14728856.7
(22) Anmeldetag: 21.05.2014
(51) Int. Cl.: B61C 3/00

(54) **FAHRZEUG, INSBESONDERE SCHIENENFAHRZEUG**
VEHICLE, IN PARTICULAR RAIL VEHICLE
VÉHICULE, EN PARTICULIER VÉHICULE FERROVIAIRE

(30) Priorität: 04.06.2013 DE 102013210333
(43) Veröffentlichungstag der Anmeldung: 03.02.2016
(73) Patentinhaber: Siemens Mobility GmbH, 81739 München (DE)
(72) Erfinder: SCHAEFER-ENKELER, Andreas, 91341 Röttenbach (DE); SCHLAHT, Jürgen, 90763 Fürth (DE)
(86) Internationale Anmeldenummer: PCT/EP2014/060430
(87) Internationale Veröffentlichungsnummer: WO 2014/195133

(56) Entgegenhaltungen:
- EP-A2- 0 383 302
- EP-A2- 2 127 935
- EP-A2- 2 368 744
- EP-A2- 2 423 066
- WO-A2-2004/035366
- CN-A- 108 639 076
- DE-A1-102010 028 004
- FR-A1- 2 571 203
- JP-A- 2012 171 411
- US-A1- 2002 034 058

## Beschreibung

Die Erfindung betrifft ein Schienenfahrzeug mit zumindest einem Wagenkasten, verteilt angeordneten Komponenten, und einer Verbindungseinrichtung, die zur Vernetzung der Komponenten vorgesehen ist.

Aufgrund der stetig zunehmenden Vielfalt von Automatisierungs- und Steueraufgaben, die von der Leittechnik eines Fahrzeugs erfüllt werden, stellen die Komponentenvernetzung und ein für diese notwendiger Bauraum einen hinsichtlich der Montage, des Gewichts und der Kosten erheblichen Aufwand bei der Fahrzeug-Entwicklung und Herstellung dar. Herkömmliche Lösungen, bei welchen einzelne Leitungen in der Form eines Kabelbaums gebündelt werden, nehmen einen erheblichen Bauraum in Anspruch und weisen den Nachteil eines hohen Gewichts auf, das insbesondere auf die einzelnen Kabelummantelungen zurückzuführen ist. Dies ist insbesondere bei Schienenfahrzeugen, bei welchen Signale fahrzeugweit über lange Strecken übertragen werden sollen, besonders nachteilhaft.

Aus der FR 2 571 203 A1 ist ein als gedruckte Leiterplatte ausgestalteter Kabelbaum für ein Kraftfahrzeug bekannt. Aus der JP2012-171411 ist die Verwendung von Leitereinheiten in einer am Unterboden eines Schienenfahrzeugs angeordneten Komponente bekannt.

Der Erfindung liegt die Aufgabe zugrunde, ein Schienenfahrzeug bereitzustellen, bei welchem die Vernetzung von im Schienenfahrzeug verteilt angeordneten Komponenten schnell, einfach und mit leichten Mitteln erfolgen kann.

Diese Aufgabe wird durch das Schienenfahrzeug mit den Merkmalen des Patentanspruchs 1 gelöst.

Erfindungsgemäß umfasst die Verbindungseinrichtung zumindest eine mit dem Wagenkasten gekoppelte Leitereinheit, die eine Leiterträgereinheit mit einem starren Leiterträger aus einem Isoliermaterial und darauf ausgebildeten Leiterbahnen aus einem leitenden Material aufweist. Die Leitereinheit ist in einem Raum zwischen einem für den Aufenthalt von Fahrgästen vorgesehenen Fahrgastraum und einer Grundwandung des Wagenkastens angeordnet und erstreckt sich entlang dieser Grundwandung über zumindest einen wesentlichen Teil der Wagenkastenlänge. Erfindungsgemäß erstrecken sich Hauptleiterbahnen in Längsrichtung der Leitereinheit über die gesamte Länge des Leiterträgers und es sind weitere Leiterbahnen vorgesehen, welche von einer Hauptleiterbahn abgezweigt diese mit zumindest einer zur Herstellung einer Verbindung mit zumindest einer der Komponenten vorgesehenen Schnittstelleneinheit verbindet.

Hierdurch kann - zumindest für einen im Wagenkasten herzustellenden Teil der Verbindungseinrichtung - der Einsatz einer aufwendigen Kabelbündelung weitestgehend vermieden werden.

Eine "Leiterbahn" ist hierbei insbesondere durch ein leitfähiges Material gebildet, welches an einer Oberfläche des aus einem Isoliermaterial hergestellten und als starrer Körper ausgebildeten Leiterträgers angeordnet ist und zumindest einen Verbindungsweg zwischen zwei voneinander getrennten Bereichen der Leitereinheit bereitstellt. Dieser Verbindungsweg kann bei der Übertragung einer Information und/oder einer Betriebsenergie zwischen zumindest zwei der zu vernetzenden Komponenten wenigstens als Bestandteil einer gesamten Verbindung dieser Komponenten genutzt und dabei mit einem anderweitigen Verbindungsmittel, wie insbesondere einer Kabeleinheit, kombiniert werden. Im Gegensatz zu einem konventionellen Kabel, bei welchem ein elektrischer Leiter und dessen isolierende Ummantelung an einem Träger befestigt werden, erfolgt bei einer Leiterbahn vorteilhafterweise eine direkte Verbindung des die Leiterbahn bildenden leitfähigen Materials mit dem Material des Leiterträgers. Eine Leiterbahn ist vorteilhafterweise relativ zum Leiterträger aufgrund einer starren Kopplung mit diesem unbeweglich, wobei die Verbindung der Leiterbahn mit dem Leiterträger vorzugsweise mittels eines Stoffschlusses hergestellt ist. Der Leiterträger kann zumindest im Bereich der Leiterbahn zum mechanischen und/oder elektromagnetischen Schutz derselben mit einer schützenden Beschichtung vorzugsweise aus einem Isoliermaterial bedeckt sein.

Durch die Verwendung von Leiterbahnen, die kompakt an einer Oberfläche des Leiterträgers angeordnet sind, kann der herkömmliche, insbesondere von Kabelummantelungen beanspruchte Bauraum vorteilhaft eingespart werden. Im Gegensatz zu konventionellen Leitern, die mit solchen Ummantelungen versehen sind, kann daher durch das vergleichsweise geringe Gewicht der Leiterbahnen und deren gemeinsamen Leiterträgers eine leichte und kompakte Verbindungseinrichtung bereitgestellt werden.

Die Schnittstelleneinheit ist vorzugsweise an einer Oberfläche des Leiterträgers und mit diesem starr verbunden angeordnet. Insbesondere kann die Schnittstelleneinheit zumindest eine an einer Oberfläche des Leiterträgers angeordnete Steckmöglichkeit aufweisen.

Durch die Anordnung der Leitereinheit in einem vom Wagenkasten umfassten Innenraum kann die Verbindungseinrichtung zur Herstellung von Steuerleitungen zwischen den Komponenten vorgesehen sein.

Erfindungsgemäß erstreckt sich die Leitereinheit in Längsrichtung des Wagenkastens über zumindest einen wesentlichen Teil der Wagenkastenlänge. Dadurch kann eine besondere große Bauraum- und Gewichtseinsparung erreicht werden, da eine für die Vernetzung notwendige Verkabelung über lange Verbindungsstrecken erheblich reduziert werden kann. Insbesondere können vorteilhaft Verbindungswege zwischen zwei Endbereichen des Wagenkastens mittels der Leitereinheit bereitgestellt werden. Die Leitereinheit gemäß der vorgeschlagenen Ausführung weist vorteilhafterweise eine Haupterstreckungsrichtung auf, die der Längsrichtung des Wagenkastens entspricht. Unter einem "wesentlichen Teil" der Wagenkastenlänge soll insbesondere zumindest 50%, besonders vorteilhaft zumindest 75% der Wagenkastenlänge verstanden werden.

Dadurch, dass die Leiterträgereinheit zumindest einen starren Leiterträger aufweist, kann eine konstruktiv einfache und besonders leichte Verbindungseinrichtung erreicht werden.

Die Leiterträgereinheit kann einen einzigen, zusammenhängenden und mit dem Wagenkasten gekoppelten Leiterträger aufweisen. Sollen mittels der Leitereinheit Verbindungswege über lange Strecken hergestellt werden, wird jedoch vorgeschlagen, um eine vorteilhafte Handhabung der Leitereinheit, insbesondere bei deren Montage im Fahrzeug zu erreichen, dass die Leiterträgereinheit einen Satz von in Längsrichtung des Wagenkastens in Reihe hintereinander angeordneten Leiterträgern aufweist, die jeweils über eine kurze Strecke miteinander verkabelt sind. Unter einer "kurzen Strecke" soll insbesondere eine Strecke verstanden werden, die weniger als 10%, besonders vorteilhaft weniger als 5% der Erstreckung der Leitereinheit in deren Haupterstreckungsrichtung beträgt. Die Leiterträger sind besonders vorteilhaft zumindest im Wesentlichen baugleich ausgebildet, wodurch ein möglichst einheitliches Herstellverfahren erreicht werden kann.

Ferner wird vorgeschlagen, dass die Schnittstelleneinheit mit der zugeordneten Komponente mittels einer flexiblen Kabeleinheit verbunden ist. Hierdurch kann eine bezüglich des Verlaufs von der Leitereinheit bis zur Komponente flexible Leiterführung erreicht werden.

Eine optimale Raumausnutzung wird dadurch erreicht, dass die Leitereinheit erfindungsgemäß in einem Raum angeordnet ist, welcher sich im Bereich einer Grundwandung des Wagenkastens und entlang dieser erstreckt. Die Grundwandung kann hierbei vorteilhafterweise zur Befestigung der Leitereinheit benutzt werden, indem Befestigungsmittel die Leitereinheit an der Grundwandung befestigen. Vorzugsweise ist der Raum von einer Seite durch die Grundwandung begrenzt. Unter einer Anordnung des Raums "im Bereich" der Grundwandung und "entlang" dieser soll insbesondere verstanden werden, dass er - in Normalrichtung zur Grundwandung, d.h. senkrecht zur Hauptebene der Grundwandung betrachtet - von einer Ebene begrenzt ist, welche parallel zur Grundwandung ausgerichtet ist und dabei einen Abstand zur Grundwandung aufweist, der maximal 25% der Erstreckung des Wagenkastens in dieser Normalrichtung beträgt. Insbesondere kann diese Ebene von einer Einrichtung gebildet sein, wie insbesondere einer Schutz- und/oder Trennwand .

Der Wagenkasten umfasst einen für den Aufenthalt von Fahrgästen vorgesehenen Fahrgastraum, wobei der Raum zwischen der Grundwandung und dem Fahrgastraum angeordnet ist. Hierdurch kann eine kompakte und für die Leitereinheit schonende Anordnung des Raums innerhalb des Wagenkastens erreicht werden. Der Begriff "zwischen" bezieht sich hierbei auf die senkrecht zur Hauptebene der Grundwandung stehende Normalrichtung zur Grundwandung. Zur Abtrennung des Raums für die Leitereinheit vom Fahrgastraum kann insbesondere eine parallel zur Grundwandung ausgerichtete Trennwand dienen.

Eine Grundwandung des Wagenkastens entspricht insbesondere einer Wandung des Wagenkastenrohbaus. Wandungen des Wagenkastenrohbaus sind für die Wagenkastenlänge bestimmend, umfassen in ihrem montierten Zustand im Zusammenwirken den Wagenkasteninnenraum und bilden Außenflächen des Wagenkastens. Für die Anordnung des Raums können alle vier, den Innenraum des Wagenkastens umfassende Grundwandungen, nämlich eine Dachwandung, eine Bodenwandung oder zwei an diese angrenzende Seitenwandungen in Betracht gezogen werden. Es kann jedoch eine optimale Ausnutzung des Bauraums erreicht werden, wenn die Leitereinheit im Dachbereich des Wagenkastens angeordnet ist. Darunter soll insbesondere verstanden werden, dass sich der Raum im Bereich der Dachwandung des Wagenkastens und entlang dieser erstreckt.

Wie oben bereits erörtert können die Leiterbahnen zur Übertragung von Betriebsenergie und/oder von Information benutzt werden. Im zuletzt genannten Fall können die Leiterbahnen insbesondere Steuerleitungen bilden, für welche eine Übertragung elektrischer Signale mit geringen Spannung und Stromstärke erfolgt und eine Vernetzung mittels Leiterbahnen daher besonders angepasst ist. Unter einer "Steuerleitung" soll insbesondere eine Leitung verstanden werden, die zur Verbindung zumindest einer Funktionskomponente mit einer Steuerkomponente dient, die zu ihrer Steuerung vorgesehen ist. Die Steuerleitung soll daher für die Übertragung von Steuersignalen der Steuerkomponente zur Funktionskomponente und ggf. Meldungen der Funktionskomponente an die Steuerkomponente geeignet sein.

In einem Schienenfahrzeug soll typischerweise eine Vernetzung von Komponenten über besonders lange Strecken bereitgestellt werden. In einer besonderen Ausführung der Erfindung ist das Schienenfahrzeug als schienengebundener Triebzug mit mehreren, miteinander gekoppelten Wagenkästen ausgebildet, welchen jeweils eine unterschiedliche Leitereinheit zugeordnet ist, wobei Anschlusseinrichtungen vorgesehen sind, die dazu dienen, die Leitereinheiten paarweise zu verbinden. In einem derartigen Triebzug sollen typischerweise Steuerleitungen zwischen Komponenten, die verschiedenen Wagenkästen zugeordnet, insbesondere in verschiedenen Wagenkästen angeordnet sind, und daher über besonders lange Strecken bereitstellt werden. Durch den Einsatz von mehreren Leitereinheiten, die jeweils mit einem unterschiedlichen Wagenkasten gekoppelt sind, kann ein Verkabelungsaufwand erheblich reduziert werden.

Ein Ausführungsbeispiel der Erfindung wird anhand der Zeichnungen erläutert. Es zeigen:
- Figur 1:: ein als Triebzug ausgebildetes Fahrzeug in einer Seitenansicht,
- Figur 2:: eine perspektivische Ansicht eines Wagenkastens des Fahrzeugs aus Figur 1 und
- Figur 3:: eine im Wagenkasten angeordnete Leitereinheit.

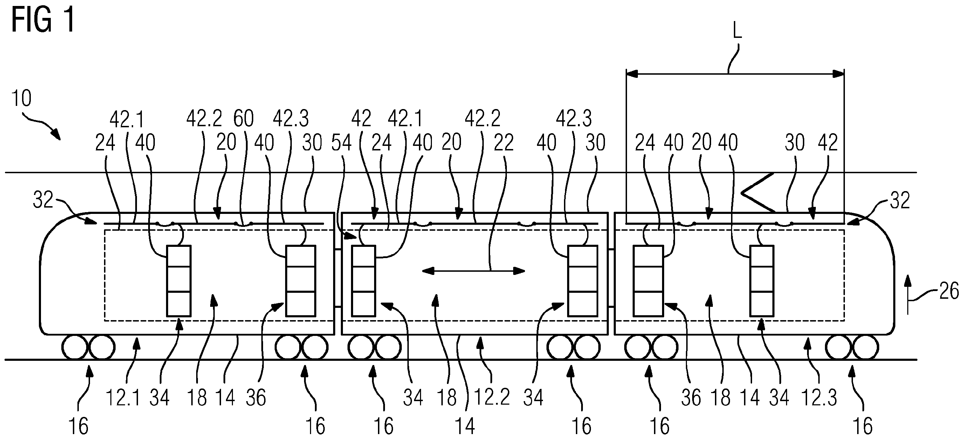

Figur 1 zeigt ein als Schienenfahrzeug ausgebildetes Fahrzeug 10 in einer stark schematisierten Seitenansicht. Es ist insbesondere als Triebzug des öffentlichen Verkehrs ausgebildet und daher zur Beförderung von Passagieren vorgesehen. Das Fahrzeug 10 weist insbesondere drei miteinander gekoppelte Wagen 12.1, 12.2 und 12.3 auf. Die gezeigte und unten beschriebene Ausführung ist beispielhaft. In alternativen Ausführungen kann das Fahrzeug 10 als ein lokbespannter Verband von Reisezugwagen oder als ein- oder mehrteiliger Omnibus für den Straßenverkehr ausgebildet sein.

Jeder Wagen 12.1 weist einen Wagenkasten 14 auf, welcher mittels Fahrwerken 16, insbesondere Drehgestellen auf Schienen abgestützt ist. Der Übersichtlichkeit halber wurde auf die Darstellung von Verkleidungselementen, mit welchen die Wagenkästen 14 ausgestattet sind, verzichtet.

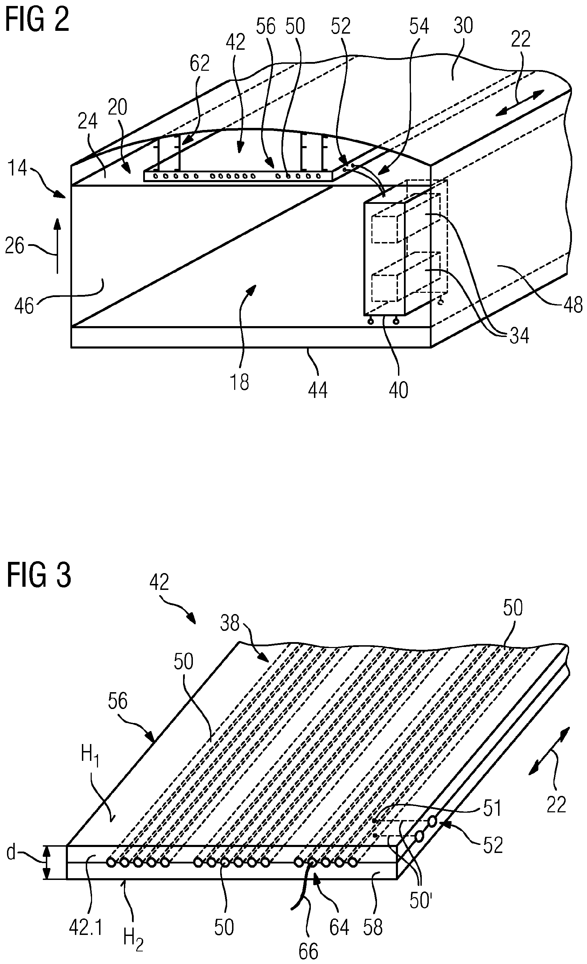

Die Wagenkästen 14 umfassen jeweils einen für den Aufenthalt von Fahrgästen vorgesehenen Fahrgastraum 18, welcher insbesondere mit einer nicht gezeigten Sitzanordnung ausgestattet ist. Im Dachbereich des Wagenkasteninnenraums ist jeweils ein Raum 20 vorgesehen, welcher sich in Längsrichtung 22 des Wagenkastens 14 erstreckt und vom Fahrgastraum 18 durch eine Trennwand 24 getrennt ist (siehe auch Figur 2). In vertikaler Richtung 26, d.h. senkrecht zum Gleisbett betrachtet, ist der Raum 20 zwischen dem Fahrgastraum 18 und dem Dach des Wagenkastens 14 angeordnet, welches eine Grundwandung 30 des Wagenkastens 14 darstellt.

Dieser langgestreckte Raum 20 dient als technischer Raum, welcher zur Unterbringung von Elementen einer Verbindungseinrichtung 32, die zur Vernetzung von im jeweiligen Wagenkasten 14 und im gesamte Fahrzeug 10 verteilten Komponenten 34, 36 dient. Zu diesen Komponenten 34, 36 gehören Funktionskomponenten 34, die jeweils zur Erledigung einer bestimmten Funktion im Fahrzeug 10 bzw. im jeweiligen Wagen 12 vorgesehen sind, und Steuerkomponenten 36, die zur Steuerung der Funktionskomponenten 34 bzw. zur Koordinierung der mit den Funktionen verbundenen Aufgaben dienen. Die Vernetzung der Funktionskomponenten 34 und der Steuerkomponenten 36 erfolgt mittels in Figur 3 näher dargestellten Steuerleitungen 38. Die Komponenten 34 bzw. 36 können insbesondere in Geräteschränken 40 des Fahrgastraums 18 untergebracht sein.

Die Verbindungseinrichtung 32 weist Leitereinheiten 42 auf, die jeweils einem unterschiedlichen Wagenkasten 14 zugeordnet sind. Die Leitereinheiten 42 sind jeweils im Raum 20 des entsprechenden Wagenkastens 14 angeordnet und erstrecken sich in Längsrichtung 22 des Wagenkastens 14. Eine dieser Leitereinheiten 42 ist in den Figuren 2 und 3 näher dargestellt.

Figur 2 zeigt einen der Wagenkästen 14 des Fahrzeugs 10 in einer perspektivischen Ansicht. Es sind insbesondere der Fahrgastraum 18 und der Raum 20 zu erkennen, die von - in Vertikalrichtung 26 betrachtet - gegenüberliegenden Grundwandungen 30 (Wagenkastendach), 44 (Wagenkastenboden) sowie von vertikalen und - senkrecht zur Längsrichtung 22 und Vertikalrichtung 26 betrachtet - gegenüberliegenden Grundwandungen 46 und 48 (Wagenkastenseiten) des Wagenkastens 14 umfasst sind. Der Raum 20 und der Fahrtgastraum 18 sind mittels der sich horizontal und in Längsrichtung 22 des Wagenkastens 14 bzw. parallel zur Grundwandung 44 erstreckenden Trennwand 24 voneinander getrennt. Im Raum 20 ist die Leitereinheit 42 angeordnet, welche Leiterbahnen 50 und eine Schnittstelleneinheit 52 aufweist. Diese Schnittstelleneinheit 52, die einer bestimmten Komponente 34 oder 36 bzw. einer Gruppe von Komponenten 34 oder 36 zugeordnet ist, dient dazu, eine Verbindung der Leiterbahnen 50 mit der zugeordneten Komponente bzw. mit der Gruppe herzustellen. Im betrachteten Beispiel ist der dargestellten Schnittstelleneinheit 52 eine Gruppe von Komponenten 34 zugeordnet, die in einem Geräteschrank 40 des Fahrgastraums 18 untergebracht sind. Die Schnittstelleneinheit 52 ist jeweils dazu ausgelegt, mit einer flexiblen Kabeleinheit 54 leitend verbunden zu werden, an welche die Komponenten 34 angeschlossen sind. Insbesondere kann die Schnittstelleneinheit 52 eine Steckmöglichkeit aufweisen, die mit zumindest einem Steckelement der Kabeleinheit 54 korrespondiert.

Die Leitereinheit 42 ist in Figur 3 näher dargestellt. Sie weist eine Leiterträgereinheit 56 mit einem starren Leiterträger 42.1 aus einem Isoliermaterial auf. Die Leiterbahnen 50 sind jeweils von einem leitenden Material gebildet, welches auf den für die Leiterbahnen 50 gemeinsamen, als Trägerplatte ausgebildeten Leiterträger 42.1 aufgebracht ist. Dieses Material ist dabei derart auf den Leiterträger 42.1 aufgebracht, dass es von diesem nicht getrennt werden kann, ohne den Leiterträger 42.1 oder die Leiterbahnen 50 zu beschädigen. Die Befestigung des Materials am Leiterträger 42.1 zur Bildung der Leiterbahnen 50 erfolgt insbesondere mittels eines Stoffschlusses. Zum mechanischen und elektromagnetischen Schutz der Leiterbahnen 50 weist die Leiterträgereinheit 56 eine Beschichtung 58 aus einem isolierenden Material auf, welche zumindest die Leiterbahnen 50 und insbesondere zumindest einen wesentlichen Teil des Leiterträgers 42.1 bedeckt.

Es sind Leiterbahnen 50 vorgesehen, die sich in Längsrichtung der Leitereinheit 42, d.h. in Längsrichtung 22 des Wagenkastens 14 erstrecken. Diese Leiterbahnen 50 dienen dabei als Hauptleiterbahnen, die Signale auf lange Strecken übertragen. Darunter sind insbesondere Leiterbahnen vorgesehen, die sich über die gesamte Länge des Leiterträgers 42.1 erstrecken. Es sind ferner Leiterbahnen 50' vorgesehen, welche jeweils eine als Hauptleiterbahn ausgebildete Leiterbahn 50 mit der Schnittstelleneinheit 52 verbinden und hierzu insbesondere von der Leiterbahn 50 an einem Abzweigungspunkt 51 abgezweigt sind.

Die Leiterträgereinheit 56 ist plattenförmig ausgebildet und weist dabei zwei gegenüberliegende, zueinander parallel ausgerichtete Hauptebenen H₁ und H₂ auf, die horizontal bzw. parallel zur Grundwandung 44 des Wagenkastens 14 ausgerichtet sind und voneinander über einen der Plattendicke d entsprechenden Abstand von einigen Zentimetern beabstandet sind.

Wie der Figur 1 zu entnehmen erstrecken sich die Leitereinheiten 42 in den jeweiligen Wagenkästen 14 in Längsrichtung 22 des Wagenkastens 14 über zumindest einen wesentlichen Teil der Wagenkastenlänge. Insbesondere weisen die Leitereinheiten 42 jeweils eine Länge L auf, die zumindest 75% der Wagenkastenlänge beträgt.

Die Leiterträgereinheit 56 der Leitereinheit 42 in jedem Wagenkasten 14 weist einen Satz von mehreren, insbesondere baugleichen und jeweils als Trägerplatte ausgebildeten Leiterträgern 42.1, 42.2, 42.3 auf, die in Längsrichtung 22 des Wagenkastens 14 voneinander getrennt bzw. in Reihe hintereinander angeordnet sind. Die obige Beschreibung betreffend den Leiterträger 42.1 findet für die Leiterträger 42.2, 42.3 entsprechende Anwendung. Die Leiterträger 42.1, 42.2, 42.3 sind jeweils mittels einer flexiblen Kabeleinheit 60 miteinander verkabelt, mittels welcher die kurze Strecke zwischen zwei benachbarten Leiterträgern überbrückt wird. Mittels der Kabeleinheiten 60 sind die Leiterbahnen 50 der zu verbindenden Leiterträger 42.1, 42.2 bzw. 42.3 miteinander verbunden, sodass Leitungen, insbesondere Steuerleitungen 38 zur Vernetzung der Funktionskomponenten 34 mit den Steuerkomponenten 36 hergestellt werden können, die sich entlang der gesamten Leitereinheit 42 erstrecken.

In einer alternativen Ausführung können die Leiterträgereinheiten 56 in den Wagenkästen 14 jeweils von einem einzigen, zusammenhängenden Leiterträger gebildet sein.

Wie oben bereits erörtert ist der Raum 20, in welchem die Leitereinheit 42 angeordnet ist, in der betrachteten, beispielhaften Ausführung im Dachbereich des jeweiligen Wagenkastens 14 angeordnet. Dabei erstreckt sich der Raum 20 im Bereich und entlang der Grundwandung 30 des Wagenkastens und befindet sich oberhalb des Fahrgastraums 18 zwischen diesem und der Grundwandung 30. In weiteren Ausführungen ist denkbar, dass sich der Raum 20 für die Leitereinheit 42 - senkrecht zur Längsrichtung 22 und zur Vertikalrichtung 26 betrachtet - seitlich neben dem Fahrgastraum 18 zwischen diesem und der Grundwandung 46 oder 48 erstreckt. Dabei erstreckt er sich im Bereich der Grundwandung 46 bzw. 48 und entlang dieser. In einer weiteren alternativen Ausführung ist denkbar, dass der Raum 20 unterhalb des Fahrgastraums 18 und - in Vertikalrichtung 26 betrachtet - zwischen diesem und der Grundwandung 44 angeordnet ist. Dabei erstreckt er sich im Bereich der Grundwandung 44 und entlang dieser.

Bei einer Anordnung entlang der Grundwandungen 30 oder 44 sind die Leitereinheit 42 bzw. die Hauptebenen H₁, H₂ der Leiterträgereinheit 56 horizontal, d.h. parallel zur Grundwandung 44 ausgerichtet. Bei einer Anordnung entlang einer Seitenwandung 46 bzw. 48 sind die Leitereinheit 42 bzw. die Hauptebenen H₁, H₂ vertikal, insbesondere parallel zur Ebene, die von der Vertikalrichtung 26 und der Längsrichtung 22 gebildet ist, ausgerichtet.

Die Leitereinheit 42 kann an der entsprechenden Grundwandung 30, 44, 46 oder 48 mittels einer Befestigungseinheit befestigt werden. In der Ausführung gemäß Figur 2 ist eine Befestigungseinheit 62 vorgesehen, durch welche die Leitereinheit 42, insbesondere der Leiterträger 42.1 an der Grundwandung 30 befestigt ist.

Die Leitereinheiten 42 der verschiedenen Wagen 12.1, 12.2, 12.3 sind paarweise miteinander verbunden. Hiermit können Steuerleitungen 38 bereit gestellt werden, die eine Übertragung von Signalen zwischen Komponenten 34, 36 in unterschiedlichen Wagen ermöglichen. Zu dieser Verbindung sind die Leitereinheiten 42 jeweils mit Anschlusseinrichtungen 64 versehen, durch welche die Leiterbahnen 50 mit entsprechenden Leiterbahnen der zu koppelnden Leitereinheit 42 verbunden werden. In der betrachteten Ausführung sind die Anschlusseinrichtungen 64 jeweils als Steckmöglichkeit ausgebildet, durch welche eine Steckverbindung mit einer Kabeleinheit 66 hergestellt werden kann, die korrespondierende Anschlusseinrichtungen 64 der beiden zu koppelnden Leitereinheiten 42 verbindet (siehe Figur 3). Die Kabeleinheit 66, die in Figur 1 der Übersichtlichkeit halber nicht dargestellt ist, kann aus mehreren, aneinander angeschlossene Kabelstücken bestehen. Dabei kann ein mittleres Kabelstück eine herkömmliche, z.B. standardisierte oder normierte Kabelverbindung zwischen zwei benachbarten Wagen 12 sein.

## Patentansprüche

1. Schienenfahrzeug mit zumindest einem Wagenkasten (14), verteilt angeordneten Komponenten (34, 36), und einer Verbindungseinrichtung (32), die zur Vernetzung der Komponenten (34, 36) vorgesehen ist,
**dadurch gekennzeichnet, dass**
- die Verbindungseinrichtung (32) zumindest eine mit dem Wagenkasten (14) gekoppelte Leitereinheit (42) umfasst, die eine Leiterträgereinheit (56) mit einem starren Leiterträger (42.1) aus einem Isoliermaterial und darauf ausgebildeten Leiterbahnen (50) aus einem leitenden Material aufweist,
- die Leitereinheit (42) in einem Raum (20) zwischen einem für den Aufenthalt von Fahrgästen vorgesehenen Fahrgastraum (18) und einer Grundwandung (30) des Wagenkastens (14) angeordnet ist und sich entlang dieser Grundwandung (30) über zumindest einen wesentlichen Teil der Wagenkastenlänge erstreckt, und
- sich Hauptleiterbahnen (50) in Längsrichtung der Leitereinheit (42) über die gesamte Länge des Leiterträgers (42.1) erstrecken und weitere Leiterbahnen (50') vorgesehen sind, welche von einer Hauptleiterbahn (50) abgezweigt diese mit zumindest einer zur Herstellung einer Verbindung mit zumindest einer der Komponenten (34) vorgesehenen Schnittstelleneinheit (52) verbindet.

2. Schienenfahrzeug nach Anspruch 1,
**dadurch gekennzeichnet, dass**
die Leiterträgereinheit (56) einen Satz von in Längsrichtung (22) des Wagenkastens (14) in Reihe hintereinander angeordneten Leiterträgern (42.1, 42.2, 42.3) aufweist, die jeweils über eine kurze Strecke miteinander verkabelt sind.

3. Schienenfahrzeug nach einem der vorhergehenden Ansprüche,
**dadurch gekennzeichnet, dass**
die Schnittstelleneinheit (52) mit der zugeordneten Komponente (34) mittels einer flexiblen Kabeleinheit (54) verbunden ist.

4. Schienenfahrzeug nach Anspruch 1,
**dadurch gekennzeichnet,**
**dass** die Leitereinheit (42) im Dachbereich des Wagenkastens (14) angeordnet ist.

5. Schienenfahrzeug nach einem der vorhergehenden Ansprüche,
**dadurch gekennzeichnet, dass**
die Leiterbahnen (50) Steuerleitungen (38) bilden.

6. Schienenfahrzeug nach einem der vorhergehenden Ansprüche,
**gekennzeichnet durch**
die Ausbildung als schienengebundener Triebzug mit mehreren, miteinander gekoppelten Wagenkästen (14), welchen jeweils eine unterschiedliche Leitereinheit (42) zugeordnet ist, und durch Anschlusseinrichtungen (64), die dazu dienen, die Leitereinheiten (42) paarweise zu verbinden.

## Claims

1. Rail-borne vehicle having at least one wagon body (14), components (34, 36) that are arranged in a distributed manner, and a connecting device (32) that is provided for linking the components (34, 36),
**characterized in that**
- the connecting device (32) comprises at least one conductor unit (42) that is coupled to the wagon body (14) and comprises a conductor carrier unit (56) with a rigid conductor carrier (42.1) composed of an insulating material and conductor tracks (50) composed of a conductive material that are formed thereon,
- the conductor unit (42) is arranged in a space (20) between a passenger compartment (18) that is provided for accommodating passengers and a boundary wall (30) of the wagon body (14) and extends along this boundary wall (30) over at least a considerable part of the wagon body length, and
- main conductor tracks (50) extend over the entire length of the conductor carrier (42.1) in the longitudinal direction of the conductor unit (42) and further conductor tracks (50') are provided that, branched from a main conductor track (50), connect this main conductor track to at least one interface unit (52) that is provided for producing a connection to at least one of the components (34).

2. Rail-borne vehicle according to Claim 1,
**characterized in that**
the conductor carrier unit (56) comprises a set of conductor carriers (42.1, 42.2, 42.3) that are arranged one behind the other in the longitudinal direction (22) of the wagon body (14) and are connected one to the other by means of cabling in each case over a short distance.

3. Rail-borne vehicle according to either of the preceding claims,
**characterized in that**
the interface unit (52) is connected to the allocated components (34) by means of a flexible cable unit (54).

4. Rail-borne vehicle according to Claim 1,
**characterized in that**
the conductor unit (42) is arranged in the roof region of the wagon body (14).

5. Rail-borne vehicle according to one of the preceding claims,
**characterized in that**
the conductor tracks (50) form control lines (38).

6. Rail-borne vehicle according to one of the preceding claims,
**characterized by**
the embodiment as a rail-borne drive train having multiple wagon bodies (14) that are coupled one to the other, in each case a different conductor unit (42) being allocated to said wagon bodies, and by connecting devices (64) that are used for the purpose of connecting the conductor units (42) in pairs.

## Revendications

1. Véhicule ferroviaire ayant au moins une caisse (14), des composants (34, 36) disposés de manière répartie et un dispositif (32) de connexion pour mettre les composants (34, 36) en réseau,
**caractérisé en ce que**
- le dispositif (32) de connexion comprend au moins une unité (42) conductrice, qui est couplée à la caisse (14) et qui a une unité (56) de support conducteur ayant un support (42.1) conducteur rigide en un matériau isolant et, constituées dessus, des pistes (50) conductrices en un matériau conducteur,
- l'unité (42) conductrice est disposée dans un espace (20) entre un espace (18) de passager prévu pour le séjour de passagers et une paroi (30) de base de la caisse (14) et s'étend le long de cette paroi (30) de base sur au moins une partie sensible de la longueur de la caisse, et
- des pistes (50) conductrices principales s'étendent dans la direction longitudinale de l'unité (42) conductrice sur toute la longueur du support (42.1) conducteur et il est prévu d'autres pistes (50') conductrices, qui, en bifurquant d'une piste (50) conductrice principale, relient celle-ci à au moins une unité (52) d'interface prévue pour la production d'une liaison avec au moins l'un des composants (34).

2. Véhicule ferroviaire suivant la revendication 1,
**caractérisé en ce que**
l'unité (56) de support conducteur a un jeu de supports (42.1, 42.2, 42.3) conducteurs montés les uns derrière les autres en série dans la direction (22) longitudinale de la caisse (14), qui sont câblés entre eux sur un tronçon court.

3. Véhicule ferroviaire suivant l'une des revendications précédentes,
**caractérisé en ce que**
l'unité (52) d'interface est reliée au composant (34) associé au moyen d'une unité (54) de câble souple.

4. Véhicule ferroviaire suivant la revendication 1, **caractérisé**
**en ce que** l'unité (42) conductrice est disposée dans la région du toit de la caisse (14).

5. Véhicule ferroviaire suivant l'une des revendications précédentes,
**caractérisé en ce que**
les pistes (5) conductrices forment des lignes (38) de commande.

6. Véhicule ferroviaire suivant l'une des revendications précédentes,
**caractérisé par**
la constitution sous la forme d'une rame automotrice guidée sur rail ayant plusieurs caisses (14) attelées entre elles, auxquelles est associée, respectivement, une unité (42) conductrice différente, et par des dispositifs (64) de raccordement, qui servent à relier paire par paire les unités (42) conductrices.
